# EUROPEAN PATENT APPLICATION

(11) **EP 2 546 941 A2**
(43) Date of publication of application: **16.01.2013**
(21) Application number: 12172822.4
(22) Date of filing: 20.06.2012
(51) Int. Cl.: H02G 11/00, H05B 3/84, B60J 1/18

(54) **Movable window with resistances provided with power supply when the window is in open position**

(30) Priority: 13.07.2011 TR 201106954
(71) Applicant: Canel Otomotiv Sanayi ve Ticaret Anonim Sirketi, 16335 Bursa (TR)
(72) Inventor: Ucar, Ramazan, BURSA (TR)
(74) Representative: Iskender, Ibrahim

(57) **Abstract**

The present invention relates to a vehicle window frame structure comprising at least one fixed window (8) provided within a frame (1, 4, 3, 4), at least one collapsible movable window (7) positioned/movable on a guide way (22) for providing continuity of the transmission of electricity to the resistances (25) formed on the movable window (7) when said movable window (7) is in open and closed positions, wherein a cable slot (5) formed on the frame (1, 2, 3, 4) for hiding and axial movement of said transmission element (18) is provided.

## Description

### Field of the Invention

The present invention relates to driver side window provided with resistances and frame thereof.

The present invention particularly relates to supplying power to resistances when movable side window provided with resistances of driver side frame in buses is in open position.

### State of the Art

Today, a similar proprietary technique implemented by the bus manufacturers in the vehicles and particularly in the buses exists. Deficiency and inadequacy of said technique is that a means close to the present invention is not utilized in the driver side window of the buses in an integrated manner with the frame. In the technique implemented on the buses by some bus manufacturers, a similar spiral cable is used, but in said technique, it creates a bad appearance as the cable does not move in a channel connected to the frame. It is exposed to all kinds of impacts, external factors, etc., thus, breakage occurs by the additional forces acting on the languets other than the ones in the opening and closing directions. Moreover, languets are exposed to water flow resulting from condensation on the window surface as they are provided in the lower part of the window and short circuit problems are encountered. When the languets are taken to the upper part in order to prevent the above problem, cable presents a bad appearance in the vehicle. In the existing frames, cable creates a bad appearance in the vehicle if the languet is provided in the upper part. The present invention solves said problems.

In the prior art, there is another technique for supplying power to the resistances provided on the movable window. Deficiencies, inadequacies and photos of said technique are presented below. In said technique, power is not supplied to the resistances when the window is open. Window has to be closed for power supply. In said technique, breakage occurs due to the formation of impact forces acting on the languets during opening and closing. The present invention solves said problems. In the current applications, a means close to the present invention is not utilized in an integrated manner with the frame.

In conclusion, the need for movable window provided with resistances allowing for power supply to the resistances when the window is open and lack of available solutions made the development in the respective technical field necessary.

### Objects of the Invention

To eliminate the disadvantages of the prior art, an object of the present invention is to enable supplying power to resistances when movable side window provided with resistances of driver side frame is in open position. In addition, another object of the present invention is to prevent breakage of so-called languet provided on the window provided with resistances. This is achieved through reduction of the tensile and compressive forces acting on the languets by means of spiral cable moving axially within the channel.

Another object of the present invention is to also eliminate breakage of the languets that may result from twisting in said frame by preventing the forces acting on languets in directions other than the window opening and closing directions as the movable window is run by means of an axially operating system called guide way.

A further object of the present invention is to avoid short circuit problems that may occur due to water flow resulting from condensation on the window surface within the vehicle by means of moving languets to the upper part of the window and a second transparent screen printing on the resistance wires such that driver's mirror vision is not affected.

Another object of the present invention is to enable supplying power to resistances when movable side window provided with resistances is in open position. To achieve this, electrical cable is moved axially within a channel provided on the frame and not visible from the interior of the vehicle. This movement is carried out with a spiral cable like telephone cord. High visual improvement is achieved by the spiral cable running axially within the channel.

Another object of the present invention is to enable power supply to the resistances provided on the movable window even when said window is open by means of using an electrical system (spiral cable system) integrated with the frame according to the invention.

In the present invention, a spiral electrical cable moving within a channel provided on the frame and supplying power to the movable window provided with resistances is used. A further object of the present invention is to reduce forces acting on the languets provided on the window and hence to eliminate languet breakage problems by means of running the spiral electrical cable axially on the frame.

Another object of the invention is to protect cable and languets from outside effects by means of running the spiral cable supplying power to the movable window provided with resistances axially within a channel provided on the frame, improving appearance.

Another object of the present invention is to eliminate breakage of the languets that may result from twisting, etc. in said frame by preventing the forces acting on languets in directions other than the window opening and closing directions as the movable window provided with resistances is run by means of an axially operating system called guide way.

After sales warranty costs incurred by the bus manufacturers is very high due to breakage of languet and short circuit. Thus, a further object of the present invention is to provide an improvement expected by the bus manufacturers.

The structural and the characteristic features and all advantages of the invention will be understood more clearly with the detailed description written by referring to the following figures and therefore the evaluation needs to be done by taking these figures and the detailed description into consideration.

### Description of the Figures

Figure 1 is an overall front view of the present invention.
Figure 2 is a cross-sectional view (section A-A) of the present invention.
Figure 3 is a cross-sectional view (section B-B) of the present invention.
Figure 4 is a cross-sectional view (section C-C) of the present invention.

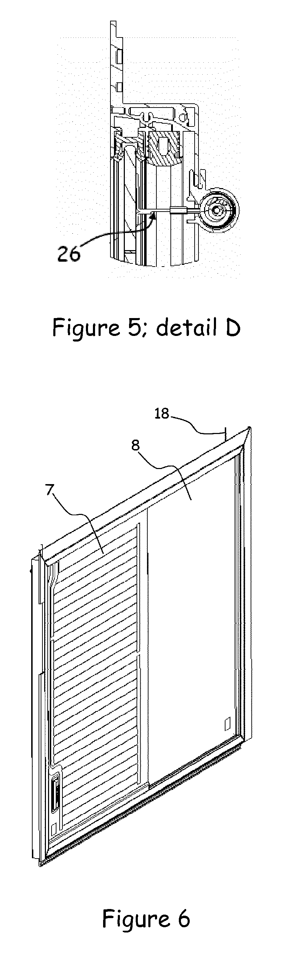

Figure 5 is a detail view (D) of the present invention.
Figure 6 is an isometric view of the present invention.

### Reference Numbers

| **Ref. No.** | **Part Name** | **Ref. No.** | **Part Name** |
|---|---|---|---|
| 1 | Front part of the frame | 14 | Inlay cushion rubber |
| 2 | Rear part of the frame | 15 | Beam seal (plastic) |
| 3 | Upper part of the frame | 16 | Flocked rubber of the beam (plastic) |
| 4 | Lower part of the frame | 17 | Flocked seal |
| 5 | Cable slot | 18 | Spiral transmission element/cable |
| 6 | Latch mating | 19 | Latch mating mounting screw |
| 7 | Movable window | 20 | Stopper mounting screw (plastic) |
| 8 | Fixed window | 21 | Latch assembly |
| 9 | Stopper (plastic) | 22 | Window guide way |
| 10 | Cable slot plugs | 23 | Window guide way plastic |
| 11 | Beam (plastic) | 24 | Screw for window guide way plastic |
| 12 | Stopper rubber | 25 | Resistance wires |
| 13 | Window U rubber | 26 | Languet |

### Detailed Description of the Invention

The present invention relates to a frame structure (1, 2, 3, 4) comprising a fixed window (8) and movable window (7) provided with resistances (25), wherein power can be supplied to the resistances (25) formed on movable window (7) by means of transmission element (18) when said movable window (7) is open.

Spiral cable used as the transmission element (18) for transmitting electricity to said movable window provided with resistances (7) runs axially within a slot (5) connected to the frame (3). Forces acting on languets (26) in directions other than the window opening and closing directions are prevented as the movable window provided with resistances (7) and moving on the frame (3) is run axially on a guide way (22). Reduction of tensile and compressive forces acting on the languets (26) of spiral cable (18) moving axially in said slot (5) is provided. A spiral electrical cable (18) moving within a slot (5) provided on the frame (3) and transmitting electricity to the movable window provided with resistances (7) is used. Languets (26) are moved to the upper part of the movable window (7) and a second transparent screen printing on the resistance wires (25) are provided such that driver's mirror vision is not affected.

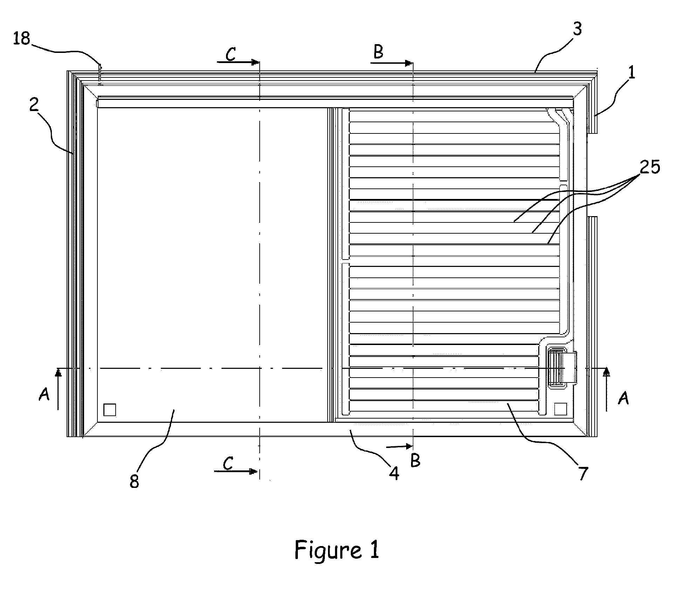

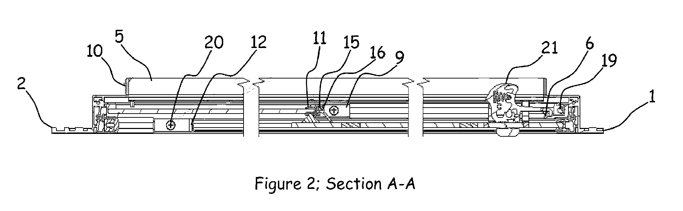

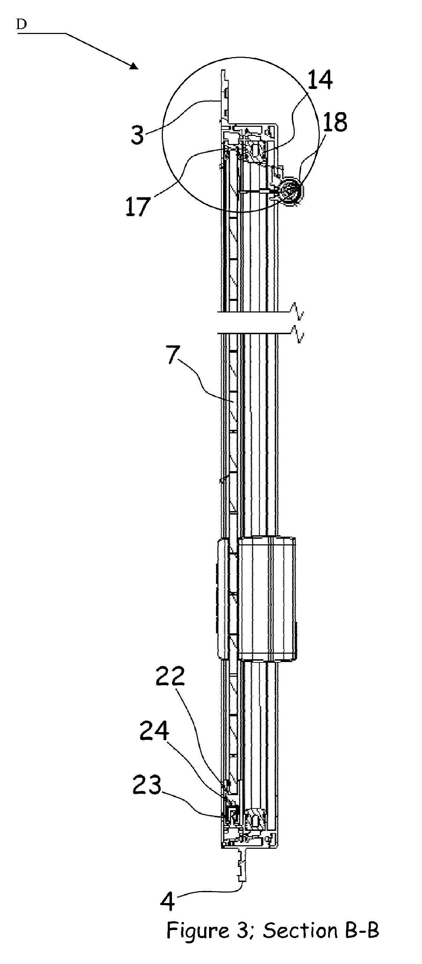

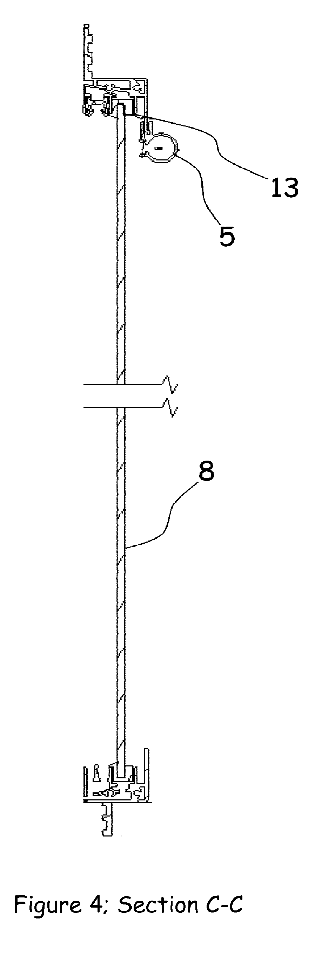

The present invention, overall view and cross-sectional views of which are given in Figure 1 and Figures 2, 3, and 4, respectively, is a vehicle window frame structure comprising the following: at least one fixed window (8) provided within a frame (1, 2, 3, 4); at least one movable window (7) that can be opened/closed and positioned/movable on a guide way (22); a transmission element (18) providing the transmission of electricity to the resistances (25) formed on said movable window (7); a cable slot (5) formed on the frame (1, 2, 3, 4) for hiding and axial movement of said transmission element (18).

Again, the present invention, a vehicle window frame structure, comprising at least one fixed window (8) provided within a frame (1, 4, 3, 4), at least one movable window (7) that can be opened/closed and positioned/movable on a guide way (22) for providing continuity of the transmission of electricity to the resistances (25) formed on the movable window (7) when said movable window (7) is in open and closed positions, wherein a cable slot (5) formed on the frame (1, 2, 3, 4) for hiding and axial movement of said transmission element (18) is provided.

Said transmission element (18) is a spiral cable. Said slot (5) is optionally formed on the upper part of the frame (3). Said movable window (7), on the other hand, can be manufactured so as to be opened and closed to inside and outside as a wing style window or to the right/left, forward/backward as a latch type window.

The frame shown in Figure 1 comprises front (1), rear (2), upper (3), and lower (4) parts. Said parts (1, 2, 3, 4) of the frame are preferably made of aluminum material and they comprise the structure where all the respective parts of driver side window frame structure are positioned or comprised therein. Said frame parts (1, 2, 3, 4) are formed as rectangle or square structure by being welded in the end parts thereof.

Movable window (7) provided with resistances (25) moves within the frame (1, 2, 3, 4). The force (opening-closing) applied on the latch (21) connected to the window first acts on the window guide way (22) through movable window provided with resistances (7) and then on the window guide way plastic (23) through window guide way plastic screw (24). These plastics (23, 24) move rigidly and easily by being fixed to the slot provided on the lower part of the frame (4).

Spiral cable (electricity transmission) is provided as the transmission element (18), continuously supplies the electricity required by the movable window (7) provided with resistances (25). Spiral cable (18) connected to the so-called languets (26) soldered on the movable window provided with resistances (7) by means of electrical terminals is placed into the cable slot (5) fixed on the upper profile of the frame (3). Spiral cable (18), thanks to the movable window guide way system, runs rigidly and axially within the cable slot (5) by the force (opening-closing) applied on the window. Initially, spiral cable is extended when the window is in closed position and it retracts within the cable profile when the window is opened. This movement is repeated rigidly for each opening and closing of the window. Cable profile plugs (10) are provided on both ends of the cable profile (5) for preventing the spiral cable to come off the profile.

Latch assembly (21) is used to prevent the movable window (7) opening from outside. Latch mating (6) is mounted on the front part of the frame (1) by means of the mounting screws (19). Movable window (7) cannot be opened with forcing from outside once the latch assembly (21) is locked to the latch mating (6).

The second window provided on the aluminum frame (1, 2, 3, 4) is a fixed window (8). The window can be mounted on the aluminum frame by means of a U rubber seal or a plastic part (13). Plastic stoppers (9) provide the windows (7, 8) to remain at a certain position. They are mounted on the upper profile by means of screws (20). Plastic stopper rubber (12) is provided on the end of the plastic stopper (9) mounted on the window guide way (22) where movable window (7) runs thereon in order to prevent noise when the window is opened.

Plastic beam (11), plastic beam flocked rubber (16) and plastic beam seal (15) are mounted on the back of the fixed window for the purpose of preventing water entry into the vehicle through the gap between two windows (7, 8). Inlay cushion rubber (14) is used to visually cover the exposed parts of the window guide way (22) provided on the aluminum frame. Flocked seal (17) is used on the window guide way (22) of the movable window (7).

Spiral cable (18) is placed into the cable slot (5) by connecting the electrical terminals provided on the end of the spiral cable (18) to the so-called electrical conductor languet (26) provided vertically on the movable window (7). Spiral cable (18) is in extended (stretched) state when the window (7) is in closed position. When the window (7) is opened, spiral cable (18) retracts within the slot (5) and provides axial operation. Power can be transmitted to the resistances (25) provided on the window (7) by means of said cable (18) when the window is in open position. Axial movement of the spiral cable (18) is secured each time as the movable window (7) runs on the guide way (22) provided on the lower part (4) of the aluminum frame and known as guide way system. Thus, small amount of tensile force originating from spiral cable (18) acts on the languets (26) provided on the window (7). Forces resulting from other external factors and causing the languet (26) breakage are completely eliminated. In addition, visual improvement is thus provided.

Operation of the guide way system is as follows. Window guide way (22) is affixed to the lower part of the movable window (7) provided with resistances (25) by sealer. Window (7) comprising guide way is placed into the channel provided on the lower part (4) of the frame. Guide way plastics (23) are fixed to the both ends of window guide way by means of screws (24). Thus, left to right, up and down movement of the window (7) is prevented. The window (7) can only move back and forth.

The present invention, in addition to the driver side frame of the buses, can also be used instead of different windows of the other commercial vehicles

## Claims

1. A frame structure (1, 2, 3, 4) comprising a fixed window (8) and a movable window (7) provided with resistances (25), **characterized in that** it comprises transmission element (18) enabling power supply to the resistances (25) formed on movable window (7) when said movable window (7) is also open.

2. A structure according to Claim 1, **characterized in that** it comprises a slot (5) connected to the frame (3) and enabling axial operation of the spiral cable used as the transmission element (18) for transmitting electricity to said movable window provided with resistances (7).

3. A structure according to Claim 1 and Claim 2, **characterized in that** it comprises a guide way (22) provided for preventing forces acting on languets (26) in directions other than the window opening and closing directions and enabling axial operation of the movable window provided with resistances (7) on said frame (3).

4. A structure according to any one of the preceding claims, **characterized in that** it comprises a spiral cable (18) moving axially within said slot (5) and reducing tensile and compressive forces acting on the languets (26).

5. A structure according to Claim 2 and Claim 4, **characterized in that** it comprises a spiral electrical cable (18) moving within a slot (5) provided on the frame (3) and transmitting electricity to the movable window provided with resistances (7).

6. A structure according to Claim 1, **characterized in that** it comprises resistance wires (25) provided with languets (26) moved to the upper part of the movable window (7) and created with a second transparent screen printing such that driver's mirror vision is not affected.

7. A vehicle window frame structure, **characterized in that** it comprises the following:
- at least one fixed window (8) provided within a frame (1, 2, 3, 4);
- at least one collapsible movable window (7) positioned/movable on a guide way (22);
- a transmission element (18) providing power supply to the resistances (25) formed on said movable window (7); and
- a cable slot (5) formed on the frame (1, 2, 3, 4) for hiding and axial movement of said cable (18).

8. A vehicle window frame structure comprising at least one fixed window (8) provided within a frame (1, 4, 3, 4), at least one collapsible movable window (7) positioned/movable on a guide way (22) for providing continuity of the transmission of electricity to the resistances (25) formed on the movable window (7) when said movable window (7) is in open and closed positions, **characterized in that** it comprises a cable slot (5) formed on the frame (1, 2, 3, 4) for hiding and axial movement of said transmission element (18).

9. A structure according to Claim 7 and 8, **characterized in that** the transmission element (18) is spiral cable.

10. A slot (5) according to Claim 7 and 8, **characterized in that** it is formed on the frame (3).

11. A movable window (7) according to Claim 7 and 8, **characterized in that** it is a latch type window opened and closed right/left - forward to backward.

12. A frame (1, 2, 3, 4) according to any one of the preceding claims, **characterized in that** it comprises front (1), rear (2), upper (3), and lower (4) parts.

13. A spiral cable (18) according to any one of the preceding claims, **characterized in that** the spiral cable (18) is in extended (stretched) state when said movable window (7) is in closed position.

14. A spiral cable (18) according to any one of the preceding claims, **characterized in that** the spiral cable (18) operates axially and retracts within the slot (5) when the movable window (7) is opened.
